# FASCICULE DE BREVET EUROPEEN

(11) **EP 3 606 865 B1**
(45) Date de publication et mention de la délivrance du brevet: **28.04.2021**
(21) Numéro de dépôt: 18713998.5
(22) Date de dépôt: 04.04.2018
(51) Int. Cl.: B67B 7/40, G01L 5/00, G01M 3/32

(54) **SYSTEME POUR L'OUVERTURE D'UN COUVERCLE METALLIQUE SOUMIS A UNE PRESSION DE GAZ**
SYSTEM ZUM ÖFFNEN VON METALLDECKELN UNTER GASDRUCK
SYSTEM FOR OPENING A METAL CLOSURE UNDER A GAS PRESSURE

(30) Priorité: 06.04.2017 FR 1752994
(43) Date de publication de la demande: 12.02.2020
(73) Titulaire: Ardagh MP Group Netherlands B.V., 7418 AH Deventer (NL)
(72) Inventeur: LEBOUCHER, Fabrice, 49100 Angers (FR)
(74) Mandataire: Jacobacci Coralis Harle
(86) Numéro de dépôt international: PCT/EP2018/058644
(87) Numéro de publication internationale: WO 2018/185184

(56) Documents cités:
- EP-A1- 1 577 222
- US-A- 3 318 143
- US-A- 4 440 016
- US-A- 5 086 653

## Description

### DOMAINE TECHNIQUE AUQUEL SE RAPPORTE L'INVENTION

La présente invention concerne le domaine général des contenants du genre boîte de conserve, et en particulier celui des couvercles métalliques à ouverture facile comportant une partie amovible qui est délimitée par une ligne d'amorce de rupture et qui est équipée d'un organe de préhension.

Elle concerne plus particulièrement un système et un procédé pour l'ouverture contrôlée d'un tel couvercle métallique à ouverture facile, soumis à une pression de gaz différentielle, de manière à pouvoir réaliser des tests de contrôle qualité dans des conditions contrôlées et reproductibles.

### ARRIERE-PLAN TECHNOLOGIQUE

Certains contenants métalliques, principalement les boîtes de conserves pour le conditionnement de denrées alimentaires, sont pourvus d'un système d'ouverture dit « facile » (ou « EOE » pour « Easy Open End »), évitant l'utilisation d'outils de type ouvre-boîtes.

A cet effet, une solution couramment mise en œuvre consiste en un couvercle métallique monobloc, comme connue par exemple de EP 1 577 222 A1, comportant deux parties, à savoir :
- une partie périphérique en forme de bague, destinée à être solidarisée avec le corps de contenant et
- un panneau central d'obturation comprenant une partie amovible qui est délimitée par une ligne d'amorce de rupture.

Pour la séparation de la partie amovible, la ligne d'amorce de rupture est déchirée par une manipulation d'un organe de préhension porté par le panneau central, couramment connu sous le nom de « anneau d'ouverture ».

Ce type d'organe de préhension comprend classiquement trois parties, ménagées successivement sur sa longueur, à savoir :
- une partie périphérique d'incision, dite « bec »,
- une partie intermédiaire de fixation avec la partie amovible du couvercle, classiquement de type rivet, et
- une partie centrale de préhension, classiquement en forme de boucle ou d'anneau.

En pratique, avant l'ouverture du couvercle métallique, l'organe de préhension est plaqué contre la surface supérieure du panneau central d'obturation.

Pour l'ouverture, l'utilisateur est amené à manœuvrer l'organe de préhension selon deux étapes successives et distinctes.

Tout d'abord, dans une première étape d'amorce de l'ouverture, l'utilisateur saisit l'organe de préhension, en général par sa partie centrale de préhension, puis il l'écarte du panneau central d'obturation.

L'organe de préhension forme alors un levier, de sorte que sa partie périphérique d'incision en forme de bec provoque une cassure locale de la ligne d'amorce de rupture.

Cette manœuvre en rotation conduit à la déchirure d'une portion amont, de part et d'autre de l'axe longitudinal de l'organe de préhension.

La partie amovible du couvercle est alors pliée localement vers l'intérieur, selon un axe virtuel qui est orienté perpendiculairement, ou approximativement perpendiculairement, par rapport à l'axe longitudinal de l'organe de préhension.

Dans une seconde étape d'ouverture, l'utilisateur exerce une traction sur l'organe de préhension de sorte à poursuivre la déchirure de la ligne d'amorce de rupture et à dissocier tout ou partie de la partie amovible par rapport au couvercle.

L'organe de préhension permet la transmission de la force appliquée par l'utilisateur, et de l'énergie générée, vers la partie amovible du couvercle métallique, de sorte à assurer la déchirure du métal le long de la ligne d'amorce de rupture.

La ligne d'amorce de rupture doit alors offrir un compromis efficace entre, d'une part, la facilité de l'ouverture par rupture de cette ligne d'amorce de rupture, qui est en pratique réduite au maximum et, d'autre part, une résistance suffisante pour éviter une déchirure non contrôlée.

En particulier, la ligne d'amorce de rupture doit résister à des phénomènes d'implosion, avec affaissement de la partie amovible du panneau central d'obturation, susceptible de survenir lors de l'ouverture du contenant.

En effet, le couvercle métallique est généralement soumis à une pression de gaz différentielle, provenant notamment du remplissage sous vide du contenant ou du fait de l'utilisation de techniques de cuisson particulières (telles que la cuisson à la vapeur).

La rupture de l'équilibre est alors susceptible de générer une propagation de la déchirure le long de la ligne d'amorce de rupture, en raison de l'effort de déchirure qui est relativement faible une fois qu'il y a eu initiation de déchirure de cette ligne d'amorce de rupture.

Le contrôle qualité de cette ligne d'amorce de rupture, notamment son comportement lors de l'ouverture du couvercle métallique soumis à une pression de gaz différentielle, constitue ainsi une information essentielle.

Elle présente notamment un intérêt certain pour détecter les risques d'implosion ou d'explosion à l'ouverture.

Mais, ce contrôle qualité s'effectue traditionnellement de manière manuelle. Les résultats obtenus ont alors l'inconvénient de présenter un caractère subjectif et un défaut de répétabilité, qui sont fonction de la manœuvre appliquée par l'opérateur.

Dans ce contexte, il existe un besoin d'un système et d'un procédé pour l'ouverture contrôlée d'un couvercle métallique à ouverture facile, soumis à une pression de gaz différentielle, qui auraient l'intérêt d'offrir des contrôles qualités objectifs et reproductibles

US 5 086 653 A1 divulgue un système pour l'ouverture contrôlée d'un couvercle métallique à ouverture facile selon le préambule de la revendication 1, ledit système comprend:
des moyens pour maintenir ledit couvercle métallique, des moyens pour manoeuvrer en basculement l'organe de préhension, de manière contrôlée et reproductible, de sorte à générer une déchirure contrôlée de la portion amont de la ligne d'amorce de rupture, et des moyens pour mesurer la force du basculement de l'organe de préhension.

US 4 440 016 A1 divulgue un système avec des moyens pour mesurer une pression de gaz différentielle entre les deux faces d'un couvercle pour tester l'étanchéité du couvercle.

### OBJET DE L'INVENTION

Afin de remédier à l'inconvénient précité de l'état de la technique, la présente invention propose un système pour l'ouverture contrôlée d'un couvercle métallique à ouverture facile soumis à une pression de gaz différentielle.

Le couvercle métallique comprend, d'une part, une bague d'assemblage et, d'autre part, un panneau central d'obturation comportant une partie amovible qui est délimitée par une ligne d'amorce de rupture et qui comporte une face supérieure munie d'un organe de préhension et une face inférieure opposée.

L'organe de préhension comprend une partie intermédiaire solidarisée avec ladite partie amovible et une partie centrale de préhension proprement dite.

La ligne d'amorce de rupture comprend deux portions :
(i) une portion amont, destinée à être déchirée par une manœuvre en basculement dudit organe de préhension, et
(ii) une portion aval, constituée par la longueur restante de ladite ligne d'amorce de rupture et destinée à être déchirée par une opération suivante de traction sur ledit organe de préhension.

Et ledit système comprend :
- des moyens pour maintenir ledit couvercle métallique,
- des moyens pour mesurer ladite pression de gaz différentielle entre les deux faces de ladite partie amovible, et
- des moyens pour manœuvrer en basculement ledit organe de préhension, de manière contrôlée et reproductible, de sorte à générer une déchirure contrôlée de la portion amont de la ligne d'amorce de rupture.

Un tel système peut être utilisé dans un test du type « Pass » / « No Pass ».

Dans un test de routine, un couvercle métallique témoin peut ainsi être étudié dans le système selon l'invention pour vérifier la qualité de fabrication d'un lot de couvercle métallique ou pour contrôler la qualité du procédé de fabrication.

Dans un test de recherche et développement, un couvercle métallique témoin peut être étudié dans le système selon l'invention pour vérifier les propriétés mécaniques de la ligne d'amorce de rupture.

D'autres caractéristiques non limitatives et avantageuses du système conforme à l'invention, prises individuellement ou selon toutes les combinaisons techniquement possibles, sont les suivantes :
- les moyens de mesure de la pression de gaz différentielle consistent en des moyens de mesure de la pression relative s'exerçant sur la face inférieure de la partie amovible, par rapport à la pression atmosphérique s'exerçant sur la face supérieure de cette partie amovible, laquelle pression relative est soit positive si la pression s'exerçant sur la face inférieure de la partie amovible est supérieure à la pression atmosphérique, soit négative si la pression s'exerçant sur la face inférieure de la partie amovible est inférieure à la pression atmosphérique ;
- les moyens de manœuvre en basculement comprennent un actionneur (par exemple un actionneur linéaire comportant une tige qui est mobile en translation) comportant une extrémité mobile, et un organe d'accrochage, dont une extrémité proximale est solidarisée avec l'extrémité mobile de l'actionneur et une extrémité distale est apte à coopérer avec la partie centrale de l'organe de préhension ;
- les moyens de maintien sont adaptés à recevoir le couvercle métallique seul et/ou un contenant fermé par ledit couvercle métallique ;
- le système comprend des moyens pour ajuster la pression de gaz différentielle entre les deux faces de ladite partie amovible ;
- dans le cas de moyens de maintien adaptés à recevoir le couvercle métallique seul, les moyens de maintien comportent au moins un corps qui comporte au moins une chambre munie d'une ouverture destinée à déboucher en regard de la face inférieure de la partie amovible du couvercle, et les moyens pour ajuster la pression de gaz différentielle consistent en des moyens pour ajuster la pression de gaz dans ladite chambre ;
- dans le cas de moyens de maintien adaptés à recevoir un contenant fermé par ledit couvercle métallique, les moyens pour ajuster la pression de gaz différentielle consistent en des moyens pour ajuster la pression de gaz dans ledit contenant ;
- les moyens de manœuvre, et le cas échéant les moyens pour ajuster la pression de gaz différentielle, sont du type pneumatique.

L'invention propose également un procédé pour l'ouverture contrôlée d'un couvercle métallique soumis à la pression de gaz différentielle, par la mise en œuvre d'un système selon l'invention.

Ce procédé comprend les étapes successives suivantes :
- mise en place dudit couvercle métallique dans les moyens de maintien et assemblage des moyens de manœuvre en basculement avec l'organe de préhension dudit couvercle métallique,
- collecte d'au moins une valeur de pression de gaz différentielle entre les deux faces de ladite partie amovible, par le biais des moyens de mesure,
- manœuvre en basculement dudit organe de préhension par le biais desdits moyens de manœuvre en basculement, pour déchirer la portion amont de la ligne d'amorce de rupture,
lequel procédé comprend encore une étape d'analyse de la déchirure de la ligne d'amorce de rupture générée par ladite manœuvre en basculement.

D'autres caractéristiques non limitatives et avantageuses du procédé conforme à l'invention, prises individuellement ou selon toutes les combinaisons techniquement possibles, sont les suivantes :
- l'étape d'analyse comprend l'une au moins des opérations suivantes : mesure de la longueur de la déchirure de la ligne d'amorce de rupture, par exemple exprimée en degré angulaire, et/ou détection d'un son concomitant à une propagation de déchirure dans la portion aval de la ligne d'amorce de rupture ; de préférence, l'étape d'analyse est suivie d'une étape de comparaison de la longueur de déchirure mesurée avec la longueur de la portion amont de la ligne d'amorce de rupture, puis d'une étape de détection d'une propagation de la déchirure dans la portion aval de la ligne d'amorce de rupture, notamment par phénomène d'implosion ou d'explosion, lorsque ladite longueur de déchirure mesurée est supérieure à ladite longueur de la portion amont de la ligne d'amorce de rupture ;
- ledit procédé comprend une étape d'ajustement de la pression de gaz différentielle avant l'étape de manœuvre en basculement de l'organe de préhension ;
- plusieurs couvercles métalliques identiques sont soumis audit procédé, avec des valeurs croissantes de pressions de gaz différentielles, pour déterminer la valeur seuil de la pression de gaz différentielle susceptible de provoquer la propagation de la déchirure dans la portion aval de la ligne d'amorce de rupture, ou au moins un couvercle métallique porté par un contenant est soumis audit procédé, sans modification de la pression de gaz différentielle, pour détecter une éventuelle propagation de la déchirure à l'ouverture dudit au moins un couvercle métallique ;
- la manœuvre en basculement dudit organe de préhension par le biais desdits moyens de manœuvre en basculement, pour déchirer la portion amont de la ligne d'amorce de rupture, est configurée pour manœuvrer en basculement ledit organe de préhension dans un temps inférieur à 50 ms, de préférence compris entre 30 et 35 ms, et/ou sur un secteur angulaire compris entre 90 et 150°, ou jusqu'à une position de fin de course basculée dans laquelle ledit organe de préhension vient en butée contre la bague d'assemblage.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue générale et schématique du système d'ouverture contrôlée selon l'invention, dans lequel est rapporté un couvercle métallique soumis à une pression de gaz différentielle ;
- la figure 2 est une vue générale et de dessus du couvercle métallique selon la figure 1, classique en soi, représenté de manière isolée ;
- les figures 3 et 4 représentent, de manière partielle et agrandie, le système d'ouverture contrôlée et le couvercle métallique selon la figure 1 ; ces figures illustrent, successivement, la mise en place du couvercle métallique au sein du système d'ouverture contrôlée (figure 3), puis la manœuvre en basculement de son organe de préhension (figure 4).

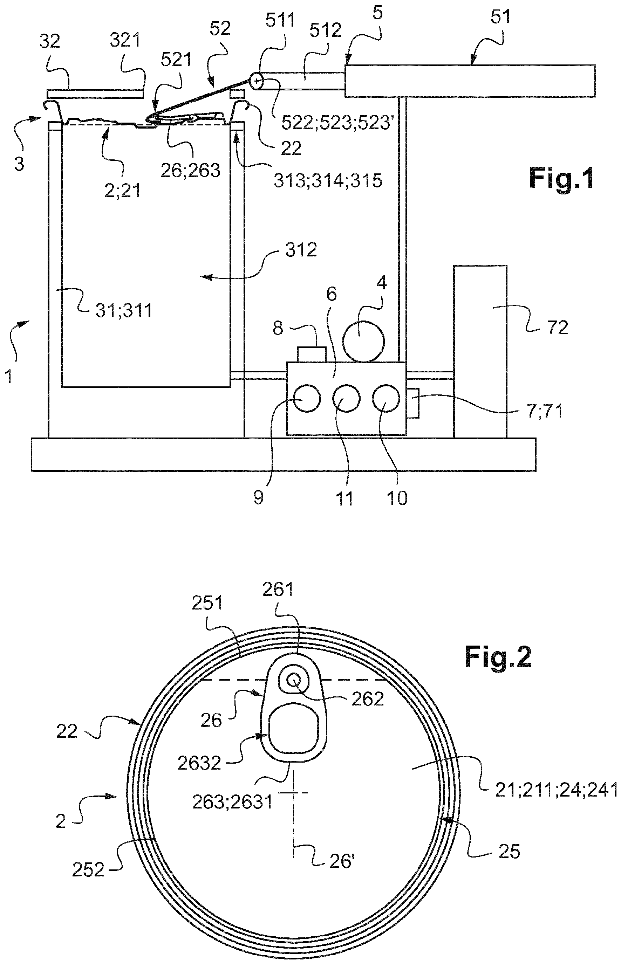

Le système 1, représenté sur la figure 1, consiste en un système pour l'ouverture contrôlée d'un couvercle métallique 2 soumis à une pression de gaz différentielle.

### Couvercle métallique

Le couvercle métallique 2, représenté sur les figures 2 à 4, est un couvercle métallique à ouverture facile, classique en soi.

Le couvercle métallique 2 est destiné à être assemblé sur la bordure supérieure d'un corps de contenant métallique (non représenté).

Ce corps de contenant se compose généralement d'un fond associé avec la bordure inférieure d'une ceinture de parois latérales (à section circulaire, carrée, rectangulaire, etc.).

La liaison entre le couvercle métallique 2 et la bordure supérieure de ce corps de contenant s'effectue de manière habituelle, par exemple par une technique de sertissage.

Ce couvercle métallique 2 est du type à « ouverture facile » (ou « EOE » pour « Easy Open End »), évitant l'utilisation d'outils de type ouvre-boîtes.

A cet effet, ce couvercle métallique 2 se compose, de manière classique, de deux parties :
- une partie centrale, formant un panneau central d'obturation 21, et
- une partie périphérique, formant une bague d'assemblage 22 adaptée à être solidarisée avec le corps de contenant.

Ce couvercle métallique 2 est avantageusement réalisé monobloc par une technique d'emboutissage, cela à partir d'une tôle en matériau métallique (avantageusement aluminium, acier, etc.).

La bague d'assemblage 22 est adaptée pour la fixation du couvercle métallique 2, avantageusement par sertissage, sur la bordure supérieure du corps de contenant comportant une paroi latérale cylindrique.

De manière alternative, la bague d'assemblage 22 peut présenter toute autre forme (par exemple carrée, rectangulaire), qui serait adaptée à la section du corps de contenant (le cas échéant parallélépipédique).

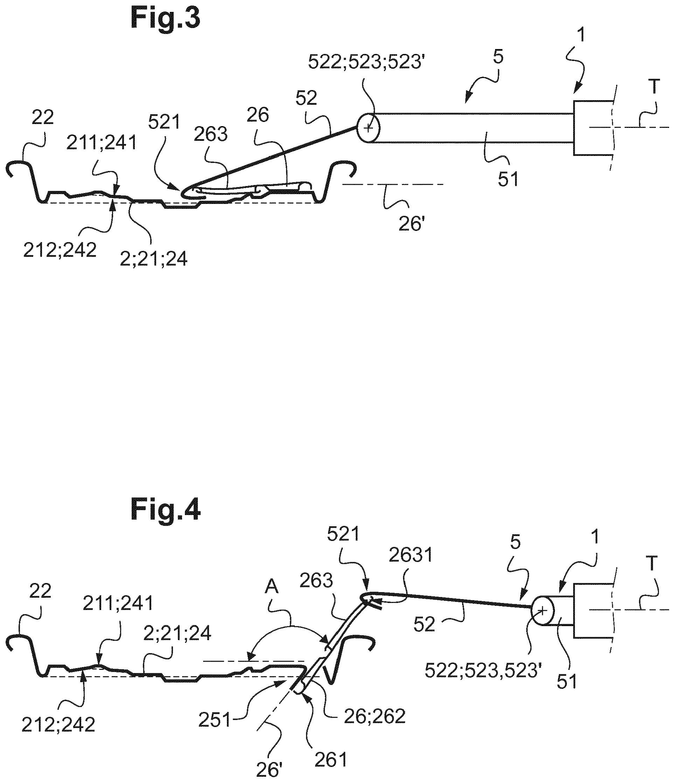

Le panneau central d'obturation 21 comporte deux faces opposées (figure 3) :
- une face supérieure 211, destinée à être orientée vers l'extérieur du contenant obtenu, et
- une face inférieure 212, destinée à être orientée vers l'intérieur du contenant, en regard du fond de ce contenant.

La distance entre ces deux faces 211, 212 correspond à l'épaisseur nominale du panneau central d'obturation 2. Cette épaisseur nominale du panneau central d'obturation 2 est par exemple comprise entre 0,14 et 0,28 mm, de préférence entre 0,16 et 0,25 mm.

Le panneau central d'obturation 21 comprend une partie amovible 24 destinée à constituer l'ouverture d'accès au contenu du contenant.

La partie amovible 24 est, d'une part, délimitée par une ligne d'amorce de rupture 25, dite encore « ligne d'incision » et, d'autre part, équipée d'un organe de préhension 26.

Là encore, cette partie amovible 24 comporte deux faces opposées :
- une face supérieure 241, destinée à être orientée vers l'extérieur du contenant obtenu, et
- une face inférieure 242, destinée à être orientée vers l'intérieur du contenant, en regard du fond de ce contenant.

L'organe de préhension 26 est ménagé au niveau de la face supérieure 211 du panneau central 21 ; il recouvre la partie amovible 24 (figures 1 à 3).

La manipulation de cet organe de préhension 26 par un utilisateur va permettre une ouverture facile du couvercle métallique 2, c'est-à-dire une désolidarisation, totale ou partielle, de la partie amovible 24 par déchirure de la ligne d'amorce de rupture 25.

Cet organe de préhension 26, bien connu, est rencontré également sous l'appellation d'« anneau d'ouverture ».

Cet organe de préhension 26 comporte classiquement trois parties, agencées successivement selon un axe longitudinal 26', à savoir :
- une partie périphérique 261, communément dénommée « bec », agencée au niveau de la ligne d'amorce de rupture 25 pour réaliser l'incision dans cette dernière,
- une partie intermédiaire 262, pour sa solidarisation avec la partie amovible 24 du couvercle métallique 2, par exemple au moyen d'une structure en forme de rivet, et
- une partie centrale 263, formant une boucle de préhension, qui est plaquée à l'origine contre la face supérieure 211 du panneau central 21 du couvercle métallique 2.

La partie centrale 263 comporte notamment un tronçon d'extrémité 2631 qui s'étend perpendiculairement à l'axe longitudinal 26' et qui est défini par une lumière traversante 2632.

De son côté, la ligne d'amorce de rupture 25 consiste en un amincissement de matière, constituant une structure de moindre résistance.

Cette ligne d'amorce de rupture 25 est ici complète (fermée), et avantageusement de forme circulaire (figure 2). De manière alternative, elle pourrait être partielle (par exemple en arc de cercle) et/ou présenter toute autre forme (carrée, rectangulaire par exemple).

Tenant compte de l'agencement de l'organe de préhension 26 et de sa manœuvre à l'ouverture du couvercle métallique 2, la ligne d'amorce de rupture 25 comprend deux portions, à savoir :
- une portion amont 251, destinée à être déchirée par la manœuvre en basculement ou pivotement initial de l'organe de préhension 26 (comme illustré sur la figure 4), et
- une portion aval 252 constituée par la longueur restante de la ligne d'amorce de rupture 25, destinée à être déchirée par la manœuvre suivante en traction sur l'organe de préhension 26 pivoté.

Lors de sa mise en œuvre, mais aussi au sein du système d'ouverture contrôlée 1, ce couvercle métallique 2 est destiné à être soumis à une pression de gaz différentielle.

Par « pression de gaz différentielle », on entend en particulier une différence des pressions en gaz entre, d'une part, la pression de gaz s'exerçant sur la face inférieure 242 de la partie amovible 24 et, d'autre part, la pression de gaz s'exerçant sur la face supérieure 241 de la partie amovible 24.

Cette pression de gaz différentielle consiste avantageusement en une pression relative s'exerçant sur la face inférieure 242 de la partie amovible 24, par rapport à la pression atmosphérique s'exerçant sur la face supérieure 241 de la partie amovible 24.

En pratique, cette pression relative est :
- une pression positive, si la pression s'exerçant sur la face inférieure 242 de la partie amovible 24 est supérieure à la pression atmosphérique, ou
- une pression négative, si la pression s'exerçant sur la face inférieure 242 de la partie amovible 24 est inférieure à la pression atmosphérique.

### Système d'ouverture contrôlée

Pour assurer le contrôle qualité de la ligne d'amorce de rupture 25 du couvercle métallique 2, le système d'ouverture contrôlée 1 comprend trois principaux moyens fonctionnels (figure 1) :
- des moyens 3 pour maintenir le couvercle métallique 2 lors de la manœuvre de son organe de préhension 26,
- des moyens 4 pour mesurer la pression de gaz différentielle entre les deux faces 241, 242 de la partie amovible 24 de ce couvercle métallique 2, et
- des moyens 5 pour manœuvrer en basculement l'organe de préhension 26 de ce couvercle métallique 2, de manière contrôlée et reproductible, de sorte à générer une déchirure contrôlée de la portion amont 251 de la ligne d'amorce de rupture 25.

Les moyens de maintien 3 sont, en l'espèce, adaptés à recevoir le couvercle métallique 2 seul.

Ces moyens de maintien 3 comprennent ici deux pièces complémentaires 31, 32 destinées à prendre en sandwich, de manière étanche à l'air, le couvercle métallique 2.

En l'espèce, ces pièces complémentaires 31, 32 consistent avantageusement en, d'une part, un corps 31 (formant une fausse boîte ou bol) et, d'autre part, un clapet 32.

Le corps 31 comporte une paroi 311 qui délimite une chambre 312.

Cette paroi 311 comporte une bordure libre 313 qui délimite une ouverture 314 de la chambre 312 et qui est équipée d'un joint 315 destinée à assurer l'étanchéité avec le couvercle métallique 2 rapporté (du côté de la face inférieure 212 du panneau central d'obturation 21).

Le clapet 32 consiste par exemple en une platine destinée à venir appuyer sur la bague d'assemblage 22 (du côté de la face supérieure 211 du panneau central d'obturation 21), de sorte à venir la presser sur le joint 315 du contenant 31.

Ce clapet 32 comporte une lumière 321 pour le passage des moyens de manœuvre en basculement 5, pour l'accès à l'organe de préhension 26 et aussi pour autoriser le basculement de ce dernier.

De manière générale, ces pièces complémentaires 31, 32 sont avantageusement amovibles, de sorte à pouvoir les adapter notamment au diamètre de la bague d'assemblage 22 du couvercle métallique 2 à tester.

Les moyens de mesure de la pression de gaz différentielle, dit encore « moyens de mesure 4 », consistent avantageusement en un vaccuomètre.

Ces moyens de mesure 4 consistent avantageusement en des moyens de mesure de la pression relative s'exerçant sur la face inférieure 242 de la partie amovible 24, par rapport à la pression atmosphérique s'exerçant sur la face supérieure 241 de la partie amovible 24.

La pression relative est :
- positive (surpression), si la pression s'exerçant sur la face inférieure 242 de la partie amovible 24 est supérieure à la pression atmosphérique, avec alors un risque d'explosion à l'ouverture, ou
- négative (dépression), si la pression s'exerçant sur la face inférieure 242 de la partie amovible 24 est inférieure à la pression atmosphérique, avec alors un risque d'implosion à l'ouverture.

En l'espèce, selon la figure 1, les moyens de mesure 4 sont raccordés au corps 31, en vue d'une mesure de la pression au sein de sa chambre 312.

Les moyens de mesure 4 sont ici incorporés au sein d'un pupitre de commande 6 qui comportent l'un au moins des moyens fonctionnels additionnels suivants :
- des moyens 7 pour ajuster la pression de gaz différentielle entre les deux faces 241, 242 de la partie amovible 24 (dits encore « moyens d'ajustement de pression 7 »),
- des moyens de régulation de pression 8, pour piloter ici la vitesse de manœuvre de l'actionneur 51,
- des moyens de mesure de pression 9, type manomètre, pour contrôler la pression générée par les moyens de régulation de pression 8, et
- une vanne de fermeture de pression 10.

De manière générale, les moyens de manœuvre en basculement 5, et le cas échéant les moyens 7 pour ajuster la pression de gaz différentielle, sont avantageusement du type pneumatique.

Les moyens 7 pour ajuster la pression de gaz différentielle comprennent avantageusement :
- un régulateur de vide 71, qui permet d'atteindre des pressions de gaz différentielle susceptibles d'aller jusqu'à 950 mbar, plus généralement allant de 600 mbar à 800 mbar, et
- une pompe à vide 72.

Ces moyens d'ajustement de pression 7 sont raccordés à la chambre 312 des moyens de maintien 3 de manière à ajuster la pression de gaz dans cette dernière.

Les moyens de manœuvre en basculement 5 sont adaptés à reproduire, au moins approximativement, le mouvement manuel de basculement appliqué à l'organe de préhension 26 lors de l'ouverture du couvercle métallique 2.

Ces moyens de manœuvre en basculement 5 comprennent avantageusement :
- un actionneur 51 qui comporte une extrémité mobile 511, et
- un organe d'accrochage 52, destiné à s'étendre entre cette extrémité mobile 511 et la partie centrale 263 de l'organe de préhension 26.

L'actionneur 51 consiste par exemple en un actionneur linéaire, par exemple un vérin pneumatique.

De préférence, les moyens 7 pour ajuster la pression de gaz différentielle (notamment la pompe à vide 72) sont alors raccordés avec les moyens de manœuvre en basculement 5 pour leur manœuvre.

De manière alternative, cet actionneur linéaire 51 peut également consister en un vérin hydraulique, électrique ou mécanique.

Cet actionneur 51 comporte une tige 512 dont l'extrémité libre forme l'extrémité mobile 511 qui est manœuvrable selon un mouvement de translation matérialisé par un axe de translation T représenté sur les figures 3 et 4.

Cet axe de translation T est destiné à s'étendre, au moins approximativement, dans un plan (ici vertical) passant par l'axe longitudinal 26' de l'organe de préhension 26.

L'exécution de cet actionneur 51 est pilotée par le biais d'un organe de commande 11, par exemple un bouton poussoir porté par le pupitre de commande 6.

L'organe d'accrochage 52 consiste par exemple en une pièce formant une sorte de bielle ou levier, apte à s'accrocher sur la partie centrale 263 de l'organe de préhension 26.

Cet organe d'accrochage 52 comprend en particulier deux extrémités formant des liaisons pivots :
- une extrémité distale 521, formant le crochet proprement dit et adaptée à coopérer avec la partie centrale 263 de l'organe de préhension 26, et
- une extrémité proximale 522, raccordée avec l'extrémité mobile 511 par le biais de moyens de liaison pivot 523 (par exemple une articulation) définissant un axe de rotation 523'.

L'extrémité distale 521 consiste par exemple en une portion en U qui s'ouvre vers l'extrémité proximale 522 et qui est destinée à entourer le tronçon d'extrémité 2631 de la partie centrale 263 de l'organe de préhension 26.

L'extrémité distale 521 de l'organe d'accrochage 52 est encore structurée de sorte à autoriser un degré de liberté en rotation de cette partie centrale 263 associée lors de la manœuvre en basculement.

L'organe d'accrochage 52 est mobile en rotation autour de l'axe de rotation 523'.

Cet axe de rotation 523' s'étend perpendiculairement par rapport à l'axe de translation T. Il est également destiné à s'étendre perpendiculairement à l'axe longitudinal 26' de l'organe de préhension 26.

De manière alternative, non représentée, les moyens de maintien 3 pourraient être adaptés à recevoir un contenant du type boîte de conserve, fermé par le couvercle métallique 2.

Dans ce cas, les moyens de mesure 4 comprennent avantageusement des moyens pour mesurer la pression de gaz directement dans le contenant fermé.

Ces moyens de mesure 4 comprennent un vaccuomètre par exemple, qui est connecté directement et de manière étanche au volume interne du contenant fermé (par exemple au travers d'un perçage).

Toujours dans ce cas, le système d'ouverture contrôlée 1 peut comporter des moyens 7 pour ajuster la pression de gaz différentielle qui se présentent sous la forme de moyens pour ajuster la pression de gaz dans le contenant.

### Procédé

La mise en œuvre du système d'ouverture contrôlée 1 selon la figure 1 est décrite plus en détails ci-dessous en relation avec les figures 3 et 4.

En pratique, le procédé pour l'ouverture contrôlée d'un couvercle métallique 2 soumis à la pression de gaz différentielle, par la mise en œuvre du système 1 selon la figure 1, comprend les étapes successives suivantes.

Tout d'abord, le couvercle métallique 2 est mis en place dans les moyens de maintien 3 (figure 3).

En particulier, les moyens de maintien 3 sont adaptés au couvercle métallique 2, notamment en fonction de sa forme et de ses dimensions.

En l'espèce, le couvercle métallique 2 est pris en sandwich entre les deux pièces complémentaires 31, 32, notamment pour assurer l'étanchéité de la chambre 312 (figure 1).

Le couvercle métallique 2 (seul ou monté sur une boîte de conserve) est orienté de sorte que l'axe longitudinal 26' de l'organe de préhension 26 vienne s'étendre dans le plan vertical passant par la trajectoire décrite par l'extrémité distale 521 de l'organe d'accrochage 52, ou encore dans le plan vertical passant par l'axe de translation T de l'actionneur 51.

L'organe de préhension 26 est également orienté de sorte que sa partie périphérique 261 est juxtaposée par rapport aux moyens de basculement 5 ; l'organe d'accrochage 52 s'étend au-dessus de l'organe de préhension 26 pour atteindre la partie centrale 263 de l'organe de préhension 26.

Les moyens de manœuvre en basculement 5, et en particulier l'extrémité distale 521 de l'organe d'accrochage 52, sont assemblés avec l'organe de préhension 26 de ce couvercle métallique 2.

En l'espèce, la tige 512 de l'actionneur 51 est dans une configuration déployée.

Ce procédé comprend ensuite une étape de collecte d'au moins une valeur de pression de gaz différentielle entre les deux faces 241, 242 de la partie amovible 24, par le biais des moyens de mesure 4 prévus à cet effet.

Avant une étape de manœuvre en basculement de l'organe de préhension 26, le procédé peut comprendre encore une étape d'ajustement de la pression de gaz différentielle par le biais des moyens 7 prévus à cet effet.

Le système 1 est ensuite piloté pour manœuvrer en basculement l'organe de préhension 26 par le biais des moyens de manœuvre en basculement 5. Ce mouvement est destiné à provoquer la déchirure de la ligne d'amorce de rupture 25, et plus précisément au moins de sa portion amont 251 (figure 4).

Pour cela, la tige 512 de l'actionneur 51 est ici manœuvrée dans une configuration escamotée. Ce déplacement provoque une translation de son extrémité mobile 511 et de son organe d'accrochage 52 associé.

Parallèlement, l'organe d'accrochage 52 subit un mouvement de rotation autour de son axe de rotation 523' (horaire sur les figures 3 et 4), qui accompagne le basculement de l'organe de préhension 26 (illustré par le passage de la figure 3 à la figure 4).

Les moyens de manœuvre en basculement 5 sont avantageusement configurés pour manœuvrer en basculement l'organe de préhension 26 de manière contrôlée et reproductible.

Pour un contrôle qualité optimal, cette manœuvre en basculement remplit avantageusement l'un au moins des paramètres suivants :
- un temps de basculement inférieur à 50 ms, de préférence compris entre 30 et 35 ms, et/ou
- un secteur angulaire de basculement (A sur la figure 4) compris entre 90° et 150°, ou jusqu'à une position de fin de course basculée dans laquelle l'organe de préhension 26 vient en butée contre la bague d'assemblage 22 (figure 4).

Ce procédé comprend ensuite une étape d'analyse de la déchirure de la ligne d'amorce de rupture 25 générée par la manœuvre en basculement précitée.

L'étape d'analyse comprend avantageusement l'une au moins des opérations suivantes :
- une mesure de la longueur de la déchirure de la ligne d'amorce de rupture 25, par exemple exprimée en degré angulaire,
- une détection d'un son concomitant à une propagation de déchirure dans la portion aval 252 de la ligne d'amorce de rupture 25.

Cette détection de son est effectuée par un opérateur et/ou par le biais de moyens sonore adaptés (comprenant avantageusement un microphone associé à des moyens d'analyse des sons captés pour isoler un évènement sonore correspondant au son recherché).

De manière générale, le son en question permet d'attester rapidement que la déchirure s'est propagée dans la portion aval 252 de la ligne d'amorce de rupture 25. Un tel son est en plus généralement à éviter car les consommateurs l'associent à une altération de qualité du produit conditionné.

De préférence, l'étape d'analyse est suivie de :
- une étape de comparaison de la longueur de déchirure mesurée avec la longueur de la portion amont 251 de la ligne d'amorce de rupture 25, et
- une étape de détection d'une propagation de la déchirure dans la portion aval 252 de la ligne d'amorce de rupture 25, lorsque la longueur de déchirure mesurée est supérieure à la longueur de la portion amont 251 de la ligne d'amorce de rupture 25.

En d'autres termes, une absence de propagation de la déchirure dans la portion aval 252 démontre alors une résistance de la ligne d'amorce de rupture 25 à l'égard de la pression de gaz différentielle établie avant le basculement de l'organe de préhension 26 (« Pass »).

Inversement, une propagation de la déchirure dans la portion aval 252 démontre alors un défaut de résistance de la ligne d'amorce de rupture 25 à l'encontre d'un phénomène d'implosion ou d'explosion selon le cas (« No Pass »).

De manière générale, le système et le procédé selon l'invention permettent une manœuvre en basculement de l'organe de préhension, de manière contrôlée et reproductible, de sorte à générer une déchirure contrôlée de la portion amont de la ligne d'amorce de rupture.

Un tel procédé selon l'invention pourra alors avantageusement être mis en œuvre avec différentes finalités de contrôle qualité.

Pour déterminer la valeur seuil de la pression de gaz différentielle susceptible de provoquer la propagation de la déchirure dans la portion aval de la ligne d'amorce de rupture, plusieurs couvercles métalliques identiques sont successivement soumis au procédé précité, avec des valeurs croissantes de pressions de gaz différentielles.

Pour détecter une éventuelle propagation de la déchirure à l'ouverture d'un couvercle métallique dans un lot de couvercles métalliques identiques, au moins un couvercle métallique porté par un contenant est soumis à ce procédé selon l'invention, éventuellement sans modification de la pression de gaz différentielle.

## Revendications

1. Système pour l'ouverture contrôlée d'un couvercle métallique à ouverture facile soumis à une pression de gaz différentielle,
lequel couvercle métallique (2) comprend, d'une part, une bague d'assemblage (22) et, d'autre part, un panneau central d'obturation (21) comportant une partie amovible (24) qui est délimitée par une ligne d'amorce de rupture (25) et qui comporte une face supérieure (241) munie d'un organe de préhension (26) et une face inférieure (242) opposée,
lequel organe de préhension (26) comprend une partie intermédiaire (262) solidarisée avec ladite partie amovible (24) et une partie centrale (263) de préhension proprement dite,
laquelle ligne d'amorce de rupture (25) comprend deux portions :
(i) une portion amont (251), destinée à être déchirée par une manœuvre en basculement dudit organe de préhension (26), et
(ii) une portion aval (252), constituée par la longueur restante de ladite ligne d'amorce de rupture (25) et destinée à être déchirée par une opération suivante de traction sur ledit organe de préhension (26),
ledit système (1) comprend :
- des moyens (3) pour maintenir ledit couvercle métallique (2), et
- des moyens (5) pour manœuvrer en basculement ledit organe de préhension (26), de manière contrôlée et reproductible, de sorte à générer une déchirure contrôlée de ladite portion amont (251) de la ligne d'amorce de rupture (25),
**caracterisé en ce que** ledit système (1) comprend de plus:
- des moyens (4) pour mesurer ladite pression de gaz différentielle entre les deux faces (241, 242) de ladite partie amovible (24).

2. Système selon la revendication 1, **caractérisé en ce que** les moyens de mesure de la pression de gaz différentielle (4) consistent en des moyens de mesure de la pression relative s'exerçant sur la face inférieure (242) de la partie amovible (24), par rapport à la pression atmosphérique s'exerçant sur la face supérieure (241) de la partie amovible (24).

3. Système selon l'une quelconque des revendications 1 ou 2, **caractérisé en ce que** les moyens de manœuvre en basculement (5) comprennent :
- un actionneur (51), comportant une extrémité mobile (511),
- un organe d'accrochage (52), dont une extrémité proximale (522) est solidarisée avec l'extrémité mobile (511) de l'actionneur (51) et une extrémité distale (521) est apte à coopérer avec la partie centrale (263) de l'organe de préhension (26).

4. Système selon l'une quelconque des revendications 1 à 3, **caractérisé en ce que** les moyens de maintien (3) sont adaptés à recevoir le couvercle métallique (2) seul et/ou un contenant fermé par ledit couvercle métallique (2).

5. Système selon l'une quelconque des revendications 1 à 4, **caractérisé en ce qu'**il comprend des moyens (7) pour ajuster la pression de gaz différentielle entre les deux faces (241, 242) de ladite partie amovible (24).

6. Système selon la revendication 5, en combinaison avec la revendication 4, **caractérisé en ce que** :
- dans le cas de moyens de maintien (3) adaptés à recevoir le couvercle métallique (2) seul, les moyens de maintien (3) comportent au moins un corps (31) qui comporte au moins une chambre (312) munie d'une ouverture (314) destinée à déboucher en regard de la face inférieure (242) de ladite partie amovible (24) du couvercle (2), et les moyens (7) pour ajuster la pression de gaz différentielle consistent en des moyens pour ajuster la pression de gaz dans ladite chambre (312), ou
- dans le cas de moyens de maintien adaptés à recevoir un contenant fermé par ledit couvercle métallique (2), les moyens pour ajuster la pression de gaz différentielle consistent en des moyens pour ajuster la pression de gaz dans ledit contenant.

7. Procédé pour l'ouverture contrôlée d'un couvercle métallique (2) soumis à une pression de gaz différentielle, par la mise en œuvre d'un système selon l'une quelconque des revendications 1 à 6, lequel procédé comprend les étapes successives suivantes :
- mise en place dudit couvercle métallique (2) dans les moyens de maintien (3) et assemblage des moyens de manœuvre en basculement (5) avec l'organe de préhension (26) dudit couvercle métallique (2),
- collecte d'au moins une valeur de pression de gaz différentielle entre les deux faces (241, 242) de ladite partie amovible (24), par le biais des moyens de mesure (4),
- manœuvre en basculement dudit organe de préhension (26) par le biais desdits moyens de manœuvre en basculement (5), pour déchirer la portion amont (251) de la ligne d'amorce de rupture (25),
lequel procédé comprend encore une étape d'analyse de la déchirure de la ligne d'amorce de rupture (25) générée par ladite manœuvre en basculement.

8. Procédé selon la revendication 7, **caractérisé en ce que** l'étape d'analyse comprend l'une au moins des opérations suivantes :
- mesure de la longueur de la déchirure de la ligne d'amorce de rupture (25), par exemple exprimée en degré angulaire,
- détection d'un son concomitant à une propagation de déchirure dans la portion aval (252) de la ligne d'amorce de rupture (25).

9. Procédé selon la revendication 8, **caractérisé en ce que** l'étape d'analyse est suivie de :
- une étape de comparaison de la longueur de déchirure mesurée avec la longueur de la portion amont (251) de la ligne d'amorce de rupture (25), et
- une étape de détection d'une propagation de la déchirure dans la portion aval (252) de la ligne d'amorce de rupture (25), notamment par phénomène d'implosion ou d'explosion, lorsque ladite longueur de déchirure mesurée est supérieure à ladite longueur de la portion amont (251) de la ligne d'amorce de rupture (25).

10. Procédé selon l'une quelconque des revendications 7 à 9, **caractérisé en ce qu'**il comprend une étape d'ajustement de la pression de gaz différentielle avant l'étape de manœuvre en basculement de l'organe de préhension (26).

11. Procédé selon l'une quelconque des revendications 7 à 10, **caractérisé en ce que** :
- plusieurs couvercles métalliques (2) identiques sont soumis audit procédé, avec des valeurs croissantes de pressions de gaz différentielles, pour déterminer la valeur seuil de la pression de gaz différentielle susceptible de provoquer la propagation de la déchirure dans la portion aval (252) de la ligne d'amorce de rupture (25), ou
- au moins un couvercle métallique (2) porté par un contenant est soumis audit procédé, sans modification de la pression de gaz différentielle, pour détecter une éventuelle propagation de la déchirure à l'ouverture dudit au moins un couvercle métallique (2).

12. Procédé selon l'une quelconque des revendications 7 à 11, **caractérisé en ce que** la manœuvre en basculement dudit organe de préhension (26) par le biais desdits moyens de manœuvre en basculement (5), pour déchirer la portion amont (251) de la ligne d'amorce de rupture (25), est configurée pour manœuvrer en basculement ledit organe de préhension (26) :
- dans un temps inférieur à 50 ms, de préférence compris entre 30 et 35 ms, et/ou
- sur un secteur angulaire compris entre 90° et 150° ou jusqu'à une position de fin de course basculée dans laquelle ledit organe de préhension (26) vient en butée contre la bague d'assemblage (22).

## Patentansprüche

1. System zum kontrollierten Öffnen eines leicht zu öffnenden, unter Gasdifferenzdruck stehenden Metalldeckels,
wobei der Metalldeckel (2) einerseits einen Befestigungsring (22) und andererseits eine zentrale Abdeckplatte (21) mit einem abnehmbaren Teil (24), der durch eine Sollbruchlinie (25) begrenzt ist und der eine mit einem Greiforgan (6) versehene Oberseite (241) und eine abgewandte Unterseite (242) aufweist, aufweist,
wobei das Greiforgan (26) einen mit dem abnehmbaren Teil (24) fest verbundenen Zwischenteil (262) und einen zentralen eigentlichen Greifteil (263) aufweist, wobei die Sollbruchlinie (25) zwei Abschnitte aufweist:
(i) einen davor liegenden Abschnitt (251), der dazu bestimmt ist, durch einen Kippvorgang des Greiforgans (26) aufgerissen zu werden, und
(ii) einen danach liegenden Abschnitt (252), der durch die Restlänge der Sollbruchlinie (25) gebildet ist und dazu bestimmt ist, durch einen anschließenden Vorgang des Ziehens am Greiforgan (26) aufgerissen zu werden,
wobei das System (1)
- Mittel (3) zum Festhalten des Metalldeckels (2) und
- Mittel (5) zum kontrollierten und wiederholbaren kippenden Betätigen des Greiforgans (26) derart, daß ein kontrolliertes Aufreißen des davor liegenden Abschnitts (251) der Sollbruchlinie (25) erfolgt,
aufweist,
**dadurch gekennzeichnet, daß** das System (1) außerdem
- Mittel (4) zum Messen des Gasdifferenzdrucks zwischen den beiden Seiten (241, 242) des abnehmbaren Teils (24)
aufweist.

2. System gemäß Anspruch 1, **dadurch gekennzeichnet, daß** die Mittel (4) zum Messen des Gasdifferenzdrucks aus Mitteln zum Messen des im Verhältnis zum auf die Oberseite (241) des abnehmbaren Teils (24) wirkenden atmosphärischen Druck auf die Unterseite (242) des abnehmbaren Teils (24) wirkenden relativen Drucks bestehen.

3. System gemäß einem der Ansprüche 1 oder 2, **dadurch gekennzeichnet, daß** die Mittel zum kippenden Betätigen (5)
- einen Antrieb (51) mit einem beweglichen Ende (511),
- ein Einhakorgan (52), von dem ein proximales Ende (522) mit dem beweglichen Ende (511) des Antriebs (51) fest verbunden ist und ein distales Ende (521) dazu ausgelegt ist, mit dem zentralen Teil (263) des Greiforgans (26) zusammenzuwirken,
aufweisen.

4. System gemäß einem der Ansprüche 1 bis 3, **dadurch gekennzeichnet, daß** die Mittel zum Festhalten (3) dazu ausgelegt sind, den Metalldeckel (2) alleine und/oder einen mit dem Metalldeckel (2) verschlossenen Behälter aufzunehmen.

5. System gemäß einem der Ansprüche 1 bis 4, **dadurch gekennzeichnet, daß** es Mittel (7) zum Einstellen der Gasdruckdifferenz zwischen den beiden Seiten (241, 242) des abnehmbaren Teils (24) aufweist.

6. System gemäß Anspruch 5 kombiniert mit Anspruch 4, **dadurch gekennzeichnet, daß**
- im Fall von zum Aufnehmen des alleinigen Metalldeckels (2) ausgelegten Mitteln zum Festhalten (3), die Mittel zum Festhalten (3) wenigstens einen Körper (31) aufweisen, der wenigstens eine Kammer (312) aufweist, die mit einer Öffnung (314) versehen ist, die dazu bestimmt ist, gegenüber der Unterseite (242) des abnehmbaren Teils (24) des Deckels (2) zu münden, und die Mittel (7) zum Einstellen des Gasdifferenzdrucks aus Mitteln zum Einstellen des Gasdrucks in der Kammer (312) bestehen, oder
- im Fall von zum Aufnehmen eines mit dem Metalldeckel (2) verschlossenen Behälters ausgelegten Mitteln zum Festhalten, die Mittel zum Einstellen des Gasdiffefenzdrucks aus Mitteln zum Einstellen des Gasdrucks in dem Behälter bestehen.

7. Verfahren zum kontrollierten Öffnen eines unter Gasdifferenzdruck stehenden Metalldeckels (2) durch Verwendung eines Systems gemäß einem der Ansprüche 1 bis 6, wobei das Verfahren die folgenden aufeinanderfolgenden Schritte aufweist:
- Einsetzen des Metalldeckels (2) in die Mittel zum Festhalten (3) und Verbinden der Mittel zum kippenden Betätigen (5) mit dem Greiforgan (26) des Metalldeckels (2),
- Erfassen wenigstens eines Wertes des Gasdifferenzdrucks zwischen den beiden Seiten (241, 242) des abnehmbaren Teils (24) über die Meßmittel (4),
- Betätigen des Greiforgans (26) mit einer Kippbewegung durch die Mittel zum kippenden Betätigen (5), um den davor liegenden Abschnitt (251) der Sollbruchlinie (25) aufzureißen,
wobei das Verfahren außerdem einen Schritt der Analyse des durch die Kippbewegung erzeugten Aufreißens der Sollbruchlinie (25) aufweist.

8. Verfahren gemäß Anspruch 7, **dadurch gekennzeichnet, daß** der Analyseschritt wenigstens einen der folgenden Vorgänge aufweist:
- Messen der Länge des Risses der Sollbruchlinie (25), zum Beispiel in Winkelgraden ausgedrückt,
- Erfassen eines Tons, der mit einem Ausbreiten des Risses im danach liegenden Abschnitt (252) der Sollbruchlinie (25) einhergeht.

9. Verfahren gemäß Anspruch 8, **dadurch gekennzeichnet, daß** auf den Analyseschritt
- ein Schritt des Vergleichens der gemessenen Länge des Risses mit der Länge des davor liegenden Abschnitts (251) der Sollbruchlinie (25) und
- ein Schritt des Erfassens eines Ausbreitens des Risses in dem danach liegenden Abschnitt (252) der Sollbruchlinie (25), insbesondere durch ein Phänomen der Implosion oder der Explosion, wenn die gemessene Länge des Risses größer als die Länge des davor liegenden Abschnitts (251) der Sollbruchlinie (25) ist, folgt.

10. Verfahren gemäß einem der Ansprüche 7 bis 9, **dadurch gekennzeichnet, daß** es einen Schritt der Anpassung des Gasdifferenzdrucks vor dem Schritt der Kippbewegung des Greiforgans (26) aufweist.

11. Verfahren gemäß einem der Ansprüche 7 bis 10, **dadurch gekennzeichnet, daß**
- mehrere identische Metalldeckel (2) dem Verfahren mit steigenden Gasdifferenzdruckwerten unterzogen werden, um den Schwellenwert des Gasdifferenzdrucks zu bestimmen, der geeignet ist, die Ausbreitung des Risses im danach liegenden Abschnitt (252) der Sollbruchlinie (25) hervorzurufen, oder
- wenigstens ein von einem Behälter getragener Metalldeckel (2) dem Verfahren ohne Änderung des Gasdifferenzdrucks unterzogen wird, um ein eventuelles Ausbreiten des Risses beim Öffnen des wenigstens einen Metalldeckels (2) zu erfassen.

12. Verfahren gemäß einem der Ansprüche 7 bis 11, **dadurch gekennzeichnet, daß** die kippende Betätigung des Greiforgans (26) durch die Mittel (5) zum kippenden Betätigen, um den davor liegenden Abschnitt (251) der Sollbruchlinie zu zerreißen, dazu ausgelegt ist, das Greiforgan (26) :
- in einem Zeitraum von weniger als 50 ms, vorzugsweise zwischen 30 und 35 ms, und/oder
- über einen Winkelbereich zwischen 90° und 150° oder bis in eine Kippendposition, in der das Greiforgan (26) gegen den Befestigungsring (22) anschlägt,
zu betätigen.

## Claims

1. A system for the controlled opening of an easy-opening metal lid subjected to a differential gas pressure,
wherein said metal lid (2) comprises, on the one hand, an assembly ring (22) and, on the other hand, a central closing panel (21) including a removable portion (24) that is delimited by a break line (25) and that includes an upper face (241) provided with a gripping member (26) and an opposite lower face (242),
wherein said gripping member (26) comprises an intermediate portion (262) fastened to said removable portion (24) and a central portion (263) for the grip itself,
wherein said break line (25) comprises two portions:
(i) an upstream portion (251), intended to be torn by a tilting of said gripping member (26), and
(ii) a downstream portion (252), consisted by the remaining length of said break line (25) and intended to be torn by a subsequent pulling on said gripping member (26),
said system (1) comprising:
- means (3) for holding said metal lid (2),
- means (5) for tilting said gripping member (26) in a controlled and reproducible manner, in order to generate a controlled tearing of said upstream portion (251) of the break line (25),
**characterized in that** said system (1) further comprises:
- means (4) for measuring said differential gas pressure between the two faces (241, 242) of said removable portion (24).

2. The system according to claim 1, **characterized in that** the means for measuring the differential gas pressure (4) consist of means for measuring the relative pressure exerted on the lower face (242) of the removable portion (24), with respect to the atmospheric pressure exerted on the upper face (241) of the removable portion (24).

3. The system according to any one of claims 1 or 2, **characterized in that** the tilting means (5) comprise:
- an actuator (51), having a mobile end (511),
- a hooking member (52), a proximal end (522) of which is fastened to the mobile end (511) of the actuator (51) and a distal end (521) of which is adapted to cooperate with the central portion (263) of the gripping member (26).

4. The system according to any one of claims 1 to 3, **characterized in that** the holding means (3) are adapted to receive the metal lid (2) alone and/or a container closed by said metal lid (2).

5. The system according to any one of claims 1 to 4, **characterized in that** it comprises means (7) for adjusting the differential gas pressure between the two faces (241, 242) of said removable portion (24).

6. The system according to claim 5, in combination with claim 4, **characterized in that**:
- in the case of holding means (3) adapted to receive the metal lid (2) alone, the holding means (3) include at least one body (31) that includes at least one chamber (312) provided with an opening (314) intended to open opposite the lower face (242) of said removable portion (24) of the lid (2), and the means (7) for adjusting the differential gas pressure consist of means for adjusting the gas pressure inside said chamber (312), or
- in the case of holding means adapted to receive a container closed by said metal lid (2), the means for adjusting the differential gas pressure consist of means for adjusting the gas pressure inside said container.

7. A method for the controlled opening of a metal lid (2) subjected to a differential gas pressure, by implementation of a system according to any one of the claims 1 to 6, said method comprising the following successive steps:
- positioning said metal lid (2) into the holding means (3) and assembling the tilting means (5) with the gripping member (26) of said metal lid (2),
- collecting at least one value of differential gas pressure between the two faces (241, 242) of said removable portion (24), using the measurement means (4),
- tilting said gripping member (26) using said tilting means (5), to tear the upstream portion (251) of the break line (25),
wherein said method also comprises a step of analysing the tearing of the break line (25) generated by said tilting.

8. The method according to claim 7, **characterized in that** the analysis step comprises one at least of the following operations:
- measuring the length of tearing of the break line (25), expressed for example in angular degree,
- detecting a sound concomitant to a tear propagation in the downstream portion (252) of the break line (25).

9. The method according to claim 8, **characterized in that** the analysis step is followed by:
- a step of comparing the measured length of tearing with the length of the upstream portion (251) of the break line (25), and
- a step of detecting a propagation of the tear in the downstream portion (252) of the break line (25), in particular by a phenomenon of implosion or explosion, when said measured length of tearing is greater than said length of the upstream portion (251) of the break line (25).

10. The method according to any one of claims 7 to 9, **characterized in that** it comprises a step of adjusting the differential gas pressure before the step of tilting the gripping member (26).

11. The method according to any one of claims 7 to 10, **characterized in that**:
- several identical metal lids (2) are subjected to said method, with increasing values of differential gas pressures, to determine the threshold value of the differential gas pressure liable to cause the propagation of the tear in the downstream portion (252) of the break line (25), or
- at least one metal lid (2) carried by a container is subjected to said method, without modification of the differential gas pressure, to detect a potential propagation of the tear at the opening of said at least one metal lid (2).

12. The method according to any one of claims 7 to 11, **characterized in that** the tilting of said gripping member (26) using said tilting means (5), to tear the upstream portion (251) of the break line (25), is configured to tilt said gripping member (26):
- within a time lower than 50 ms, preferably comprised between 30 and 35 ms, and/or
- over an angular sector comprised between 90° and 150° or up to a tilt limit position in which said gripping member (26) comes in abutment against the assembly ring (22).
